(19) Europäisches Patentamt
European Patent Office
Office européen des brevets

(11) **EP 2 335 113 B1**

(12) **FASCICULE DE BREVET EUROPEEN**

(45) Date de publication et mention de la délivrance du brevet:
**05.11.2014 Bulletin 2014/45**

(21) Numéro de dépôt: **09741342.1**

(22) Date de dépôt: **25.09.2009**

(51) Int Cl.:
*G02F 1/03* (2006.01)    *G02F 1/035* (2006.01)
*G02F 1/225* (2006.01)    *G02F 1/35* (2006.01)
*G02F 1/365* (2006.01)    *G02F 3/02* (2006.01)
*G02F 1/21* (2006.01)    *G02F 3/00* (2006.01)

(86) Numéro de dépôt international:
**PCT/FR2009/001142**

(87) Numéro de publication internationale:
**WO 2010/043777 (22.04.2010 Gazette 2010/16)**

(54) **COMPOSANT OPTIQUE A HÉTÉROSTRUCTURE DE RÉSEAUX DE GUIDES D'ONDE**

OPTISCHE KOMPONENTE MIT EINER WELLENLEITERARRAY-HETEROSTRUKTUR

OPTICAL COMPONENT HAVING A WAVEGUIDE ARRAY HETEROSTRUCTURE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.09.2008 FR 0805307**

(43) Date de publication de la demande:
**22.06.2011 Bulletin 2011/25**

(73) Titulaires:
• **Centre National de la Recherche Scientifique (CNRS)**
**75794 Paris Cedex 16 (FR)**
• **Groupe des Ecoles de Télécommunications - Ecole Nationale Supérieure des Télécommunications**
**75634 Paris Cedex 13 (FR)**

(72) Inventeurs:
• **MOISON, Jean-Marie**
**F-78290 Croissy-Sur-Seine (FR)**

• **MINOT, Christophe**
**F-75013 Paris (FR)**

(74) Mandataire: **Novagraaf Technologies**
**122, rue Edouard Vaillant**
**92593 Levallois-Perret Cedex (FR)**

(56) Documents cités:
• **SYMS R R A: "Approximate solution of eigenmode problems for layered coupled waveguide arrays" IEEE JOURNAL OF QUANTUM ELECTRONICS USA, vol. QE-23, no. 5, mai 1987 (1987-05), pages 525-532, XP002527785 ISSN: 0018-9197 cité dans la demande**
• **FLEISCHER J W ET AL: "Spatial photonics in nonlinear waveguide arrays" OPTICS EXPRESS OPT. SOC. AMERICA USA, vol. 13, no. 6, 21 mars 2005 (2005-03-21), XP002527786 ISSN: 1094-4087 cité dans la demande**

**Description**

L'invention se rapporte de façon générale à un composant optique comprenant un réseau de guides d'onde couplés.

De tels composants optiques comprenant un réseau de guides d'onde couplés sont par exemple décrits dans la publication « Spatial photonics in nonlinear waveguide arrays », Fleischer et al., Optics Express Vol. 13, No. 6, pp. 1780-1796 (2005). Dans cette publication, les guides d'onde du réseau sont couplés de façon uniforme dans le réseau. L'uniformité du couplage au sein du réseau est obtenue par le fait que deux guides d'onde adjacents sont couplés selon le même coefficient de couplage dans le réseau.

Il est connu qu'un signal optique peut se propager de façon guidée dans de tels réseaux de guides d'onde. Le signal optique se propageant dans un tel réseau de guides est appelé « onde de Floquet-Bloch », ou « supermode », ou « modes de Schrödinger discrets » selon les auteurs. Dans le cadre de la présente demande, ce signal sera appelé onde guidonique. L'onde guidonique est définie par son vecteur d'onde guidonique et les composantes de ce vecteur sont liées par une relation, la relation de diffraction. Par exemple, dans le cadre d'une théorie simple des modes couplés dans un plan, si $k_X$ et $k_Z$ sont les deux composantes du vecteur d'onde guidonique selon les directions X et Z, en unités réduites $k_Z$ est proportionnel à - 2 $\cos k_X$, la constante de proportionnalité étant égale au coefficient de couplage.

Le traitement du signal optique dans le réseau de guides d'onde couplés est particulièrement avantageux notamment dans le domaine des télécommunications.

Dans un tel réseau de guides d'onde couplés, le signal optique constitué par un faisceau lumineux se propage en principe de façon linéaire, avec une divergence naturelle éventuellement nulle.

Or, notamment dans le domaine des composants de commutation pour télécommunications optiques, il est avantageux qu'un faisceau lumineux puisse être traité, et notamment orienté, réfléchi ou focalisé.

Pour ce faire, plusieurs solutions ont été envisagées.

D'abord, il est possible de faire sortir le faisceau lumineux du réseau de guides d'onde, et d'orienter le faisceau par des moyens mécaniques connus tels que des miroirs ou des dioptres, ou des lentilles.

Toutefois, cette solution a l'inconvénient de devoir être mise en oeuvre hors du réseau de guides, de sorte que le guidage du faisceau lumineux est perdu. L'utilisation de réseaux de guides d'onde est donc peu efficace au regard de l'intégration. L'invention vise notamment à pallier cet inconvénient en fournissant un composant permettant de traiter le signal à l'intérieur du réseau lui-même, de sorte à former un composant tout optique.

Afin de dévier un faisceau de manière statique dans un réseau de guides d'onde, il est connu de la publication « Approximate solution of Eigenmode Problems for coupled waveguide Arrays », Richard R.A. Syms, IEEE Journal of Quantum Electronics, vol. QE 25, n° 5, pp. 525-532 (1987), un réseau de guides d'onde comprenant une zone de guides d'onde parallèles fortement couplés et une zone de guides d'onde parallèles faiblement couplés de sorte à permettre une déviation statique à l'interface entre les deux zones. Dans cette publication, la simple déviation du faisceau se propageant dans le réseau de guides d'onde est toutefois trop limitée pour pouvoir être appliquée dans des composants industriels.

L'approche originale à la base de l'invention est d'utiliser de tels réseaux de guides pour obtenir un composant optique d'un nouveau type, permettant de traiter le signal à l'intérieur du réseau lui-même, de sorte à former un composant tout optique.

L'invention se rapporte à un composant optique comprenant un réseau de guides d'onde couplés dans lequel le réseau de guides d'onde comprend :

- une première zone formée de guides d'onde parallèles couplés selon un premier coefficient de couplage ;
- une deuxième zone adjacente à la première zone formée de guides d'onde parallèles couplés selon un deuxième coefficient de couplage inférieur au premier coefficient de couplage,
- une troisième zone adjacente à la deuxième zone de guides d'onde parallèles couplés selon un troisième coefficient de couplage supérieur au deuxième coefficient de couplage,
- une quatrième zone adjacente à la troisième zone de guides d'onde parallèles couplés selon un quatrième coefficient de couplage inférieur au troisième coefficient de couplage ;
- une cinquième zone de guides d'onde parallèles couplés selon un cinquième coefficient de couplage supérieur au quatrième coefficient de couplage.

Grâce à cette configuration des zones de guides d'onde, un signal optique peut être transmis entre la première zone et la cinquième zone. En effet, la deuxième zone et la quatrième zone, ayant de faibles coefficients de couplage, forment une double barrière à effet tunnel résonnant autour de la troisième zone ayant un fort coefficient de couplage. La présence de cette double barrière à effet tunnel résonnant permet normalement de contrarier la transmission de l'onde incidente, mais elle peut aussi la favoriser pour certaines directions d'incidence. En fait, la zone centrale, c'est-à-dire la troisième zone, formée de guides d'onde faiblement couplés, possède un ensemble discret de constantes de propagation propres selon la direction de guidage. Cette zone centrale constitue pour le signal optique une zone relais, c'est-à-dire qu'elle atténue, voire annihile, la réflexion sur les barrières et favorise la transmission à travers elles, lorsque la condition de résonance est satisfaite, c'est-à-dire lorsque l'une des constantes de propagation propres de la zone centrale est égale à la composante de la constante de propagation de l'onde incidente selon la direction de guidage. La constante de propagation de l'onde incidente n'est autre que son vecteur d'onde guidonique et définit sa direction de propagation, soit la direction d'incidence.

En d'autres termes et selon la terminologie adoptée dans le cadre de la présente demande, la zone centrale, c'est-à-dire la troisième zone, formée de guides d'onde fortement couplés, sera appelée un chenal. Ce chenal est entouré de part et d'autre par les zones médianes, c'est-à-dire la deuxième et la quatrième zone de guides d'onde faiblement couplés, que l'on appellera des digues. Le chenal n'est accessible depuis la première zone que par des faisceaux lumineux d'incidence bien choisie, donnant lieu à un effet de résonance au voisinage de la condition de résonance, et il peut alors les transmettre vers la cinquième zone à travers les digues, par effet tunnel optique.

Comme dans tout dispositif à double barrière, le bon fonctionnement de cette structure impose des contraintes à la hauteur et à la largeur des barrières. La hauteur de la barrière, fixée par le rapport entre les coefficients de couplage du chenal et de la digue, doit être assez grande pour bloquer la propagation hors résonance. Par exemple, une valeur de 2 est correcte, comme le montrent les équations de passage de dioptre guidonique détaillées ci-dessous. Il faut également que la largeur de la barrière entrante soit assez faible pour que l'onde évanescente qui la traverse ait une amplitude assez grande pour sonder le chenal et établir la résonance, et de même pour la barrière sortante. Ceci revient à ce que cette largeur soit de l'ordre de la portée de l'onde évanescente dont une bonne approximation est

$$L_{\text{év}} = \frac{1}{\text{Argch}\left(\dfrac{c_{\text{chenal}}}{c_{\text{digue}}}\right)}.$$

Pour le rapport de coefficients de couplage donné en exemple ci-dessus, une largeur de un ou deux guides est correcte. Quant au chenal, il est nécessaire d'avoir recours à la simulation pour en déterminer la largeur de façon compatible avec les contraintes de la technologie, selon la procédure décrite plus loin dans le paragraphe consacré à un dimensionnement possible du composant. Les caractéristiques du composant sont en effet très sensibles à la largeur du chenal.

La condition de résonance introduit des contraintes supplémentaires quant aux valeurs relatives des coefficients de couplage de la première zone et de la troisième zone d'une part, et de la troisième zone et de la cinquième zone d'autre part : le coefficient de couplage de la première zone et de la cinquième zone doit être suffisamment grand pour que puissent se propager dans ces zones des ondes guidoniques dont la composante de vecteur d'onde guidonique selon la direction de guidage soit égale à ou assez voisine de l'une des constantes de propagation propres de la zone centrale.

Lorsqu'un fort faisceau incident arrive vers la deuxième zone en traversant donc la première zone, si son incidence est choisie au voisinage de la condition de résonance, il se produit une accumulation d'énergie lumineuse dans le chenal, c'est-à-dire dans la troisième zone centrale. La modification de la densité de puissance dans cette zone permet alors une modification de la constante de propagation de la troisième zone, par exemple par effet Kerr optique, ce qui a pour conséquence de modifier les puissances transmise vers et/ou réfléchie sur le chenal et les zones suivantes. Le composant peut alors être utilisé de façon entièrement optique en tant qu'atténuateur limiteur de puissance, ou en tant que porte logique, notamment NOT ou XOR.

Selon un mode de réalisation de l'invention, la zone centrale, c'est-à-dire la troisième zone a une constante de propagation, et le composant optique comprend en outre des moyens de commande agencés pour modifier la constante de propagation de la troisième zone.

Selon ce mode de réalisation de l'invention, en modifiant la constante de propagation de la troisième zone, on agit sur la propagation du signal traversant le chenal, de sorte que l'on agit sur le faisceau transmis vers la cinquième zone. La sensibilité de la transmission aux moyens de commande est maximale au voisinage de la résonance.

On décrit ci-dessous des modes de réalisation particuliers permettant de réaliser cette modification de la constante de propagation de la troisième zone.

Selon un premier mode de réalisation, les moyens de commande peuvent comprendre des moyens optiques agencés pour faire varier la densité de puissance d'au moins un faisceau lumineux de commande dirigé vers la troisième zone. Le faisceau lumineux de commande peut être transmis par le dessus ou par le dessous du composant vers la troisième zone.

En particulier, les moyens optiques peuvent être agencés de sorte que le faisceau de commande soit susceptible de se propager dans la troisième zone.

Ce mode de réalisation utilise avantageusement le fait qu'un faisceau de commande peut être confiné et se propager dans le chenal formé par la troisième zone centrale entourée des digues formées par la deuxième zone et la quatrième zone. Ce confinement, qui est lui aussi intimement lié aux constantes de propagation propres du chenal formé par la zone centrale, est précisément décrit dans la publication de Syms et al. précitée. La modification de la densité de puissance du faisceau de commande permet alors une modification de la constante de propagation de la troisième zone par exemple par effet Kerr optique, de sorte que la résonance se déplace sur les axes représentant une composante de la direction d'incidence. Dès lors, on peut agir sur les caractéristiques de transmission et/ou de réflexion d'un faisceau incident vers et/ou sur le chenal et les zones suivantes.

Pour ce faire, la densité de puissance du faisceau incident est choisie de préférence de sorte à rester inférieure à celle du faisceau de commande dans la zone d'interaction entre les deux faisceaux, c'est-à-dire dans la zone centrale correspondant à la troisième zone.

La modification de la densité de puissance du faisceau de commande entraîne alors une modification des puissances transmise et réfléchie pour le faisceau incident.

Le composant optique peut dans ce cas être utilisé comme coupleur bidirectionnel ajustable n% / (100 - n)%, le taux de transmission n étant ajustable en fonction de la puissance du faisceau de commande. Le composant peut également être utilisé en tant que routeur, commutateur ou porte logique, notamment NOT ou XOR.

En outre, lorsque la puissance du faisceau de commande est inférieure à la puissance du faisceau incident, tout en ayant une densité de puissance supérieure, le composant peut être utilisé en tant que transphaser, qui est l'équivalent optique d'un transistor.

Selon un autre mode de réalisation, afin de modifier la constante de propagation de la troisième zone, le composant peut comprendre des moyens électriques agencés pour générer un champ électrique dans la troisième zone. En faisant varier ce champ électrique, on peut alors modifier la constante de propagation de la troisième zone par effet électro-optique, par exemple l'effet Pockels. La variation du champ électrique a alors le même effet sur la constante de propagation que la variation de la densité de puissance d'un faisceau de commande.

Les moyens électriques peuvent par exemple comprendre des électrodes déposées sur la deuxième zone et la quatrième zone.

Lorsqu'une tension électrique est appliquée entre ces électrodes, un champ électrique est généré dans la zone centrale formant le chenal, c'est-à-dire la troisième zone.

Des électrodes peuvent également être placées sur cette zone centrale pour produire une composante de champ électrique perpendiculaire au plan du composant dans la zone centrale.

On décrit maintenant des modes de réalisation détaillés de l'invention en référence aux figures annexées dans lesquelles :

- FIG. 1 illustre un réseau de guides à cinq zones selon un mode de réalisation de l'invention ;
- FIG. 2 représente la variation des coefficients de couplage dans le réseau de guides d'onde illustré sur la FIG. 1 ;
- FIG. 3 représente le réseau de guides de la FIG. 1 dans lequel est traité un faisceau guidonique ;
- FIG. 4 représente un mode de réalisation du réseau de guides de la FIG. 1 avec un faisceau de commande confiné dans la zone centrale ;
- FIG. 5 représente la fraction du faisceau incident transmise par la structure illustrée sur la FIG. 4 en fonction de la puissance du faisceau de contrôle, ainsi que cette même fonction pour un dispositif de l'état de la technique ;
- FIG. 6 représente un mode de réalisation du réseau de guides de la FIG. 1 avec des moyens électriques ;
- FIG. 7 illustre un réseau de guides à sept zones selon un autre mode de réalisation de l'invention ;
- FIG. 8 représente une construction graphique des solutions de passage d'un dioptre vertical dans un réseau de guides d'onde ;
- FIG. 9 illustre deux exemples de fonctions logiques tout-optique obtenues grâce à un composant selon l'invention.

Sur les figures, des références numériques identiques se rapportent à des éléments techniques similaires.

Selon l'invention, un composant optique comprend un réseau de guides d'onde 1.

De façon connue en soi, par exemple dans la publication de Syms et al. précitée, un réseau de guides d'onde 1 comprend des guides d'onde parallèles orientés selon une direction de guidage.

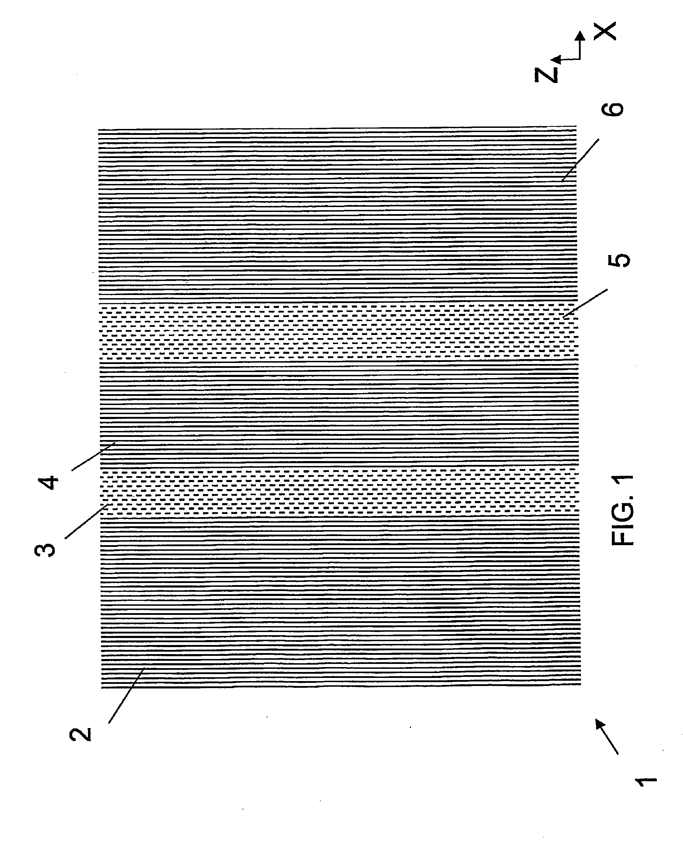

Sur la FIG. 1, le réseau de guides d'onde 1 comprend des guides d'onde parallèles orientés selon la direction de guidage Z.

Le réseau de guides d'onde 1 comprend au moins cinq zones numérotées 2 à 6 caractérisées par des coefficients de couplage particuliers uniformes au sein de chaque zone. En revanche, le coefficient de couplage varie au passage d'une première zone à la zone adjacente à cette première zone. Le coefficient de couplage est par exemple déterminé par l'espacement entre les guides dans chaque zone et, plus les guides sont resserrés dans une zone, plus le coefficient de couplage sera fort dans cette zone. Il peut également être déterminé par la géométrie ou l'indice de l'espace entre les guides d'onde.

La zone centrale 4 comprend des guides d'onde couplés parallèles orientés selon la direction de guidage Z. Dans la zone centrale 4, les guides d'onde sont couplés selon un fort coefficient de couplage. Deux zones médianes 3 et 5 sont disposées de part et d'autre de la zone centrale 4 et comprennent chacune des guides d'onde couplés parallèles orientés selon la direction de guidage Z. Les guides d'onde sont couplés selon un faible coefficient de couplage, c'est-à-dire selon un coefficient de couplage inférieur au coefficient de couplage de la zone centrale 4. Les coefficients de couplage des guides d'onde des zones 3 et 5 sont par exemple égaux, mais ils pourraient être différents en restant inférieurs au coefficient de couplage des guides d'onde de la zone médiane 4.

Les zones médianes 3 et 5 sont adjacentes à la zone centrale 4 et les interfaces respectives entre les zones médianes 3 et 5, et la zone centrale 4 sont de préférence parallèles selon la direction de guidage.

Le réseau de guides d'onde comprend en outre une zone 2 adjacente à la zone médiane 3 et l'interface entre la zone 2 et la zone médiane 3 est de préférence parallèle à la direction de guidage.

De la même façon, le réseau de guides d'onde comprend en outre une zone 6 adjacente à la zone médiane 5 et l'interface entre la zone 6 et la zone médiane 5 est de préférence parallèle à la direction de guidage.

Le coefficient de couplage des guides d'onde de la zone 2 est supérieur au coefficient de couplage des guides d'onde de la zone médiane 3 adjacente.

De la même façon, le coefficient de couplage des guides d'onde de la zone 6 est supérieur au coefficient de couplage des guides d'onde de la zone médiane 5 adjacente.

En d'autres termes, les guides d'onde parallèles de la zone 2 sont plus fortement couplés que les guides d'onde parallèles de la zone 3, et les guides d'onde parallèles de la zone 6 sont plus fortement couplés que les guides d'onde parallèles de la zone 5.

Les coefficients de couplage des guides d'onde des zones 3 et 5 peuvent être égaux pour plus de simplicité dans la fabrication, mais cette égalité n'est pas nécessaire au bon fonctionnement du composant. De même, les coefficients de couplage des guides d'onde des zones 2 et 6 peuvent être égaux au coefficient de couplage des guides d'onde de la zone centrale 4 pour plus de simplicité.

En d'autres termes, sur la FIG. 1, le réseau de guides d'onde 1 comprend une succession de cinq bandes formées de guides d'onde parallèles tous orientés selon la direction de guidage.

Un signal optique peut se propager de façon guidée dans un tel réseau de guides d'onde. Dans un tel réseau de guides d'onde couplés, la propagation n'est donc pas seulement une propagation individuelle dans la direction de guidage des guides d'onde, mais une propagation collective libre. Le faisceau résultant d'une propagation collective libre d'une superposition d'ondes guidoniques est ici appelé « faisceau guidonique ».

Comme il sera décrit plus en détail ci-après, la configuration particulière des bandes selon l'invention permet d'agir sur la propagation de ce faisceau guidonique.

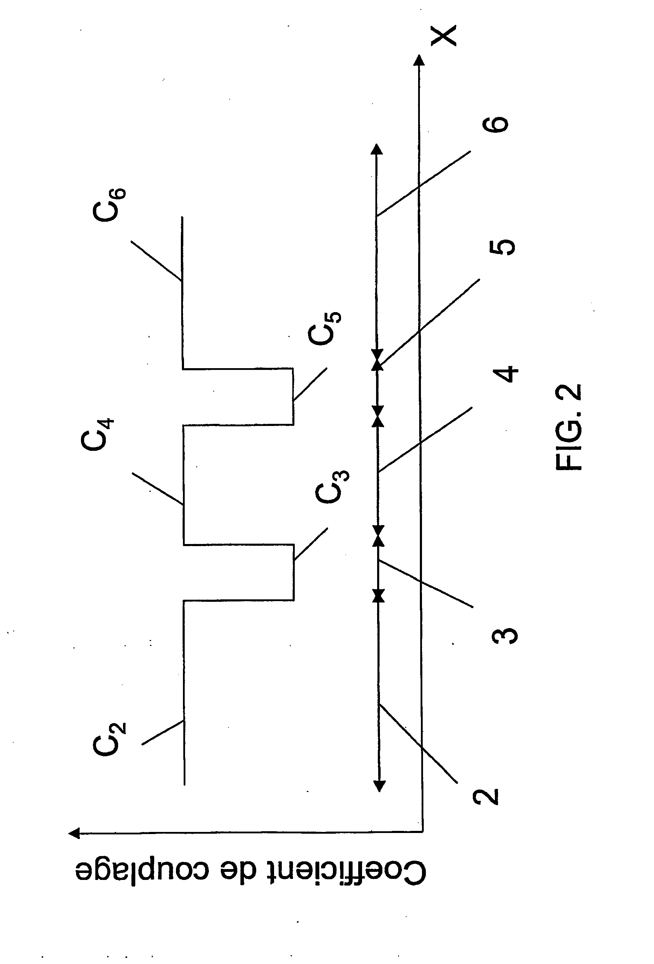

La FIG. 2 représente la variation des coefficients de couplage dans le réseau de guides d'onde 1 en fonction des différentes bandes 2 à 6 du réseau 1 dans la direction X perpendiculaire à la direction de guidage, dans un cas particulier où les coefficients de couplage sont égaux dans les bandes 3 et 5 d'une part, 2, 4 et 6 d'autre part.

On comprend qu'un fort couplage entre les guides d'onde facilite la propagation d'un faisceau lumineux entre les guides alors qu'un faible couplage limite cette propagation. À la limite, lorsque les guides ne sont plus couplés, l'effet de propagation entre les guides disparaît.

En ce sens, les zones médianes 3 et 5 peuvent être vues comme une double barrière, ou double digue, entourant la zone centrale 4, qui peut s'apparenter à un chenal.

Par analogie avec un effet de type « tunnel résonnant », la présence de la double barrière formée par les zones médianes 3 et 5 à faible coefficient de couplage permet la transmission d'un faisceau lumineux entre les zones de transmission 2 et 6 lorsque la propagation de ce faisceau est en résonance avec la propagation propre à la zone centrale 4. En optique guidonique, la condition de résonance s'exprime en termes de direction de propagation. Un faisceau se propageant dans la zone 2, incident sur la première barrière formée par la zone 3, pourra alors être transmis en partie vers la zone 6 s'il possède une direction d'incidence convenable. En d'autres termes, ce faisceau peut traverser la double barrière formée par les zones médianes 3 et 5 entourant la zone centrale 4.

Au contraire, en l'absence de zone centrale 4 et donc de résonance, une simple barrière ne permettrait pas d'obtenir cet effet analogue à l'effet tunnel résonnant.

De nombreuses méthodes de réalisation des bandes de guides décrites ci-dessus sont possibles, comme par exemple l'épitaxie et la gravure dans le système GaAs/GaAlAs, ou la diffusion dans le système basé sur la silice. Ces méthodes sont bien connues de l'homme du métier.

Pour concevoir les guides individuels, l'homme de métier peut utiliser plusieurs méthodes connues en soi. En particulier, il peut utiliser la structure dite "shallow ridge" en semiconducteurs III-V obtenus par gravure chimique d'un empilement réalisé en MOCVD dans un système InP/InGaAs. Un exemple en est décrit en détail dans la publication "Diffraction management" H.S. Eisenberg, Y. Silverberg, R. Morandotti, and J.S. Aitchison, Physical Review Letters, vol. 85/9, pp. 1863-1866 (2000). Pour cette structure particulière conçue pour fonctionner à 1,55$\mu$m, le coefficient de couplage est de 0,15mm$^{-1}$.

La variation du couplage inter-guide d'une bande à l'autre peut être réalisée par la variation de l'espacement des guides ou bien par variation de la géométrie ou de l'indice des zones inter-guides. Plus précisément, la variation de coefficient de couplage est par exemple obtenue en faisant varier la distance d entre les guides d'onde dans la direction perpendiculaire à la direction de guidage et, le cas échéant, dans la direction de guidage si l'on souhaite obtenir des interfaces obliques ou courbes entre les différentes zones. On définit donc une fonction C(d) correspondant au coefficient de couplage entre deux guides d'onde en fonction de la distance entre les guides d'onde.

Ce coefficient de couplage dépend du recouvrement des modes des guides individuels. Ce recouvrement des modes ayant une forme quasi-exponentielle, la fonction C(d) est donc également quasi-exponentielle décroissante. Il est donc possible d'obtenir des fortes variations du coefficient de couplage avec une faible variation de la distance entre les guides d'onde. Pour réaliser ces variations, il est aussi possible, dans tous les modes de réalisation, de creuser des sillons entre les guides d'onde selon des motifs définis par un masque de gravure reproduisant une hétérostructure de réseaux de guides possédant différents coefficients de couplage, telle qu'elle est définie à la conception par les différentes zones. Dans ce cas, la gravure doit être d'autant plus profonde que l'on souhaite abaisser localement le coefficient de couplage. Le calcul de la gravure nécessaire pour obtenir les coefficients souhaités peut être réalisé par une simulation numérique connue en tant que telle appelée « Beam Propagation Method » en langue anglaise, soit « méthode de propagation de faisceau ». De façon également connue, suite à la gravure, on réalise des tests pour vérifier que le réseau correspond bien à la structure désirée.

On décrit maintenant le composant optique selon l'invention en fonctionnement.

L'association de deux bandes de guides d'onde parallèles couplés avec des coefficients de couplage différents modifie la constante de propagation d'une onde guidonique et donc la direction de propagation de l'onde à la traversée de leur interface. Cette modification de la direction de propagation est par exemple décrite dans la publication de Syms et al. précitée dans le cas où le coefficient de couplage varie entre deux bandes dans la direction perpendiculaire à la direction de guidage et est constant dans la direction de guidage.

De même, le coefficient de couplage peut varier dans la direction de guidage, de sorte que l'interface entre deux zones de guides d'onde couplés ayant des coefficients de couplage différents peut être oblique ou courbe comme décrit en détail dans la demande PCT/FR2008/000628 non publiée.

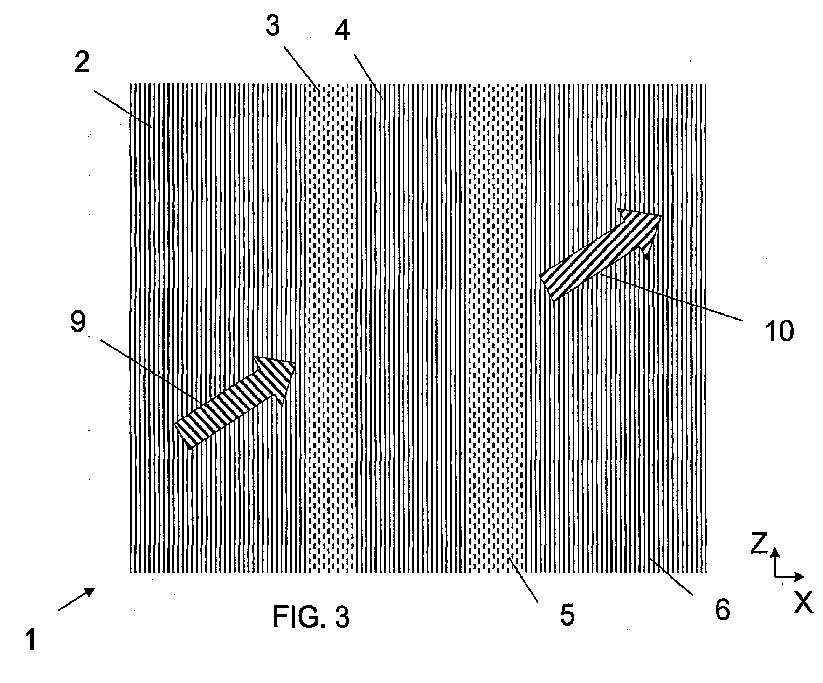

Illustré FIG. 3, la zone centrale 4 définit un mode privilégié de constante de propagation $k_M$. Lorsqu'un faisceau guidonique 9 se propageant dans la zone d'entrée 2 est incident vers la zone médiane 3 adjacente à la zone centrale 4 avec une composante de constante de propagation selon la direction de guidage égale à ou voisine de $k_M$, le faisceau guidonique 9 peut être transmis vers la zone de sortie 6 par un effet de type tunnel résonnant sous la forme d'un faisceau guidonique transmis 10. Une partie de l'énergie du faisceau guidonique 9 s'accumule dans la zone centrale 4, ce qui a pour effet de modifier la puissance du faisceau transmis au passage de la zone centrale 4. Le composant forme alors un atténuateur de puissance.

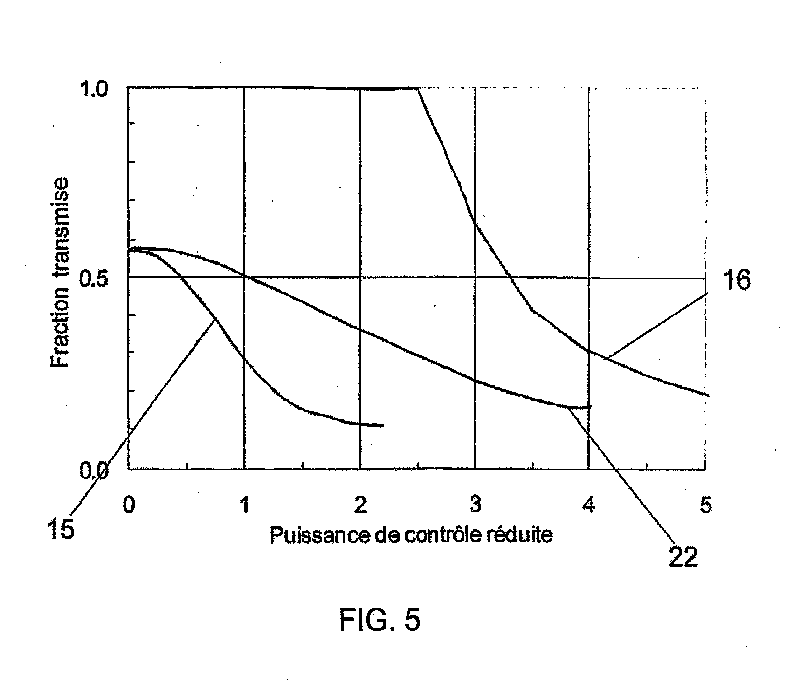

La fraction transmise d'un faisceau guidonique peut alors varier quasi-linéairement avec l'intensité du faisceau contrôle, sans effet de seuil comme dans le dispositif optique non-linéaire de référence décrit par exemple dans la publication « Incohérent blocker soliton interactions in Kerr waveguide arrays », J. Meier & al, Optics Letters, vol. 30, n° 23, pp. 3174-3176 (2005). La FIG. 5 illustre la fraction de puissance transmise en fonction de la puissance du faisceau de contrôle, ici la puissance du faisceau incident 9 lui-même, exprimée par guide du réseau de guides. La courbe 22 représente un exemple de la variation dans un composant 1 selon l'invention alors que la courbe 16 représente la variation dans un composant selon l'état de la technique. On comprend aisément que l'absence d'effet de seuil dans le composant selon l'invention est très avantageuse en pratique pour en étendre la plage de fonctionnement.

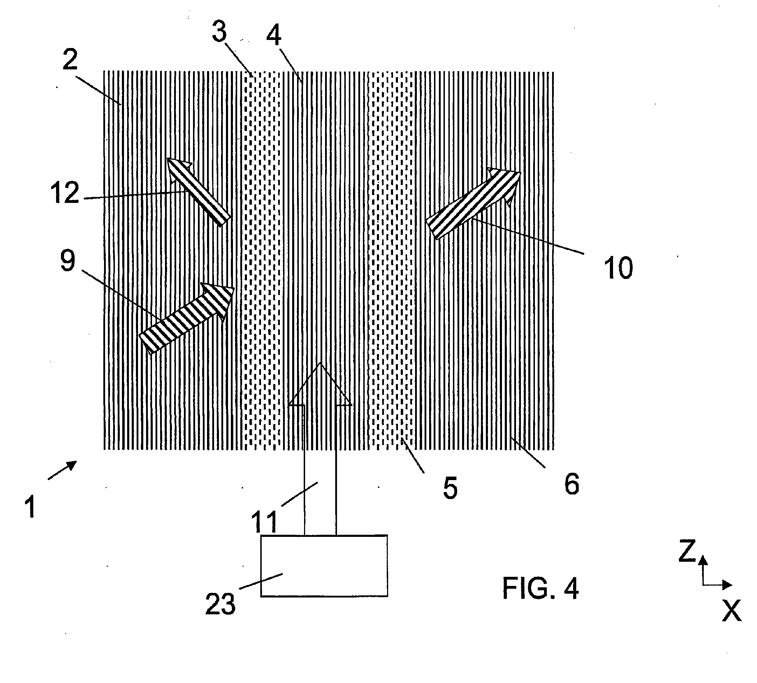

Illustré FIG. 4, la puissance du faisceau transmis 10 peut être ajustée grâce à un faisceau de commande 11 émis par exemple par un laser 23. Le faisceau de commande 11 est transmis vers la zone centrale 4 par exemple dans la direction de guidage Z correspondant à la direction des interfaces entre la zone centrale 4 et, respectivement, les zones médianes 3 et 5.

Comme mentionné ci-dessus, les zones médianes 3 et 5 de faible coefficient de couplage forment une barrière pour le faisceau de commande 11, de sorte que le faisceau est confiné dans la zone centrale 4 et se propage dans la zone centrale 4 sous la forme d'une onde guidonique dans la direction de guidage Z.

Le laser 23 peut également être agencé de sorte que le faisceau lumineux de commande 11 soit dirigé vers la zone centrale 4 par le dessous ou le dessus du composant 1.

Par effet Kerr optique, une modification de la densité de puissance du faisceau de commande 11 par le laser 23 modifie l'indice optique et par voie de conséquence la constante de propagation $k_M$ dans la zone centrale 4, ce qui modifie les propriétés de transmission de cette zone centrale 4.

Dès lors, lorsqu'un faisceau guidonique 9 est incident vers la zone centrale 4, une modification de la densité de puissance du faisceau de commande 11 provoque une modification de la puissance du faisceau transmis 10 et du faisceau réfléchi 12. Ce phénomène de modification des puissances transmises et réfléchies se produit notamment lorsque la densité de puissance du faisceau incident 9 est inférieure à la densité de puissance du faisceau de commande 11.

Le composant optique peut alors former un coupleur bidirectionnel ajustable du type n% / (100 - n) %, le pourcentage de transmission n étant contrôlable optiquement par la densité de puissance du faisceau de commande 11.

De façon très avantageuse, la fraction transmise d'un faisceau guidonique varie quasi-linéairement avec l'intensité du faisceau contrôle, sans effet de seuil comme dans le dispositif de référence, également susceptible de fonctionner comme coupleur, commutateur ou routeur. La FIG. 5 illustre la fraction de puissance transmise en fonction de la puissance du faisceau de contrôle, ici le faisceau de commande 11, exprimée par guide du réseau de guides. La courbe 15 représente un exemple de variation dans un composant 1 selon l'invention alors que la courbe 16 représente la variation dans un composant selon l'état de la technique. On comprend aisément que l'absence d'effet de seuil dans le composant selon l'invention est très avantageuse en pratique.

En outre, dans le cas particulier où la puissance du faisceau de commande 11 est inférieure à la puissance du faisceau signal incident 9, ce qui n'est pas incompatible avec la condition sur les densités de puissance, il y a alors un effet possible semblable à celui d'un transistor, dénommé "transphaser" en optique.

Par exemple, si $P_{incident}$ est la puissance du faisceau incident 9, analogue au courant d'émetteur d'un transistor, $P_{transmis}= \alpha \times P_{incident}$ avec $\alpha<1$, $\alpha$ voisin de l'unité, peut-être considérée comme la puissance $P_{collecteur}$ recueillie sur un collecteur, analogue au courant de collecteur d'un transistor, avec une puissance sur le port de commande $P_{commande}$ (puissance du faisceau de commande 11), analogue au courant de base d'un transistor. Si $P_{transmis}= \beta \times P commande$ on obtient alors un transphaser de gain en puissance optique $\beta>1$, analogue optique d'un transistor de gain en courant $\beta$.

Plusieurs faisceaux de commande 11 peuvent également être confinés dans le chenal 4, en configuration copropagative ou contrapropagative, ou simplement dirigés sur la région du chenal 4 traversée par le faisceau signal, par exemple depuis le dessus ou le dessous du composant, ou encore selon toute combinaison de l'une ou l'autre méthode.

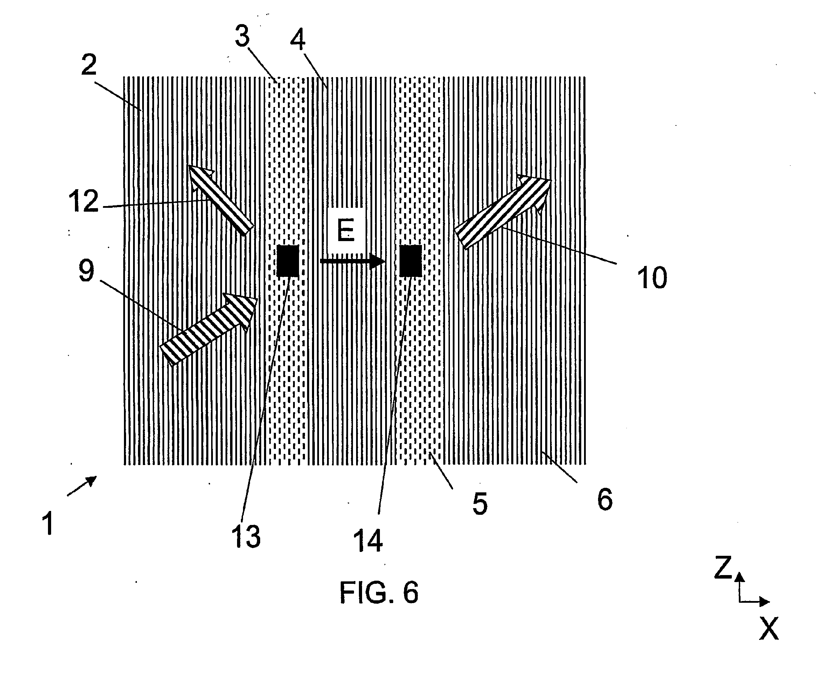

Illustré FIG. 6, selon un autre mode de réalisation de l'invention, on positionne des électrodes 13 et 14 sur les zones médianes 3 et 5. Ces électrodes 13 et 14 peuvent recevoir une tension variable de sorte à générer un champ électrique E perpendiculaire à la direction de guidage d'amplitude variable. Par effet Pockels ou effet Kerr électro-optique, la variation de ce champ électrique provoque une variation de la constante de propagation dans la zone centrale. La variation du champ électrique E a donc les mêmes effets que la variation de puissance d'un faisceau de commande optique tel que 11 et permet alors d'obtenir un coupleur sans seuil comme illustré sur la FIG. 4.

De la même façon, la constante de propagation dans le chenal formé par la zone 4 peut être modulée par d'autres moyens, par exemple en fonction d'une température, d'une contrainte mécanique, d'un cycle dépôt/évaporation, d'une circulation de fluide, de la présence d'espèces chimiques ou d'objets biologiques.

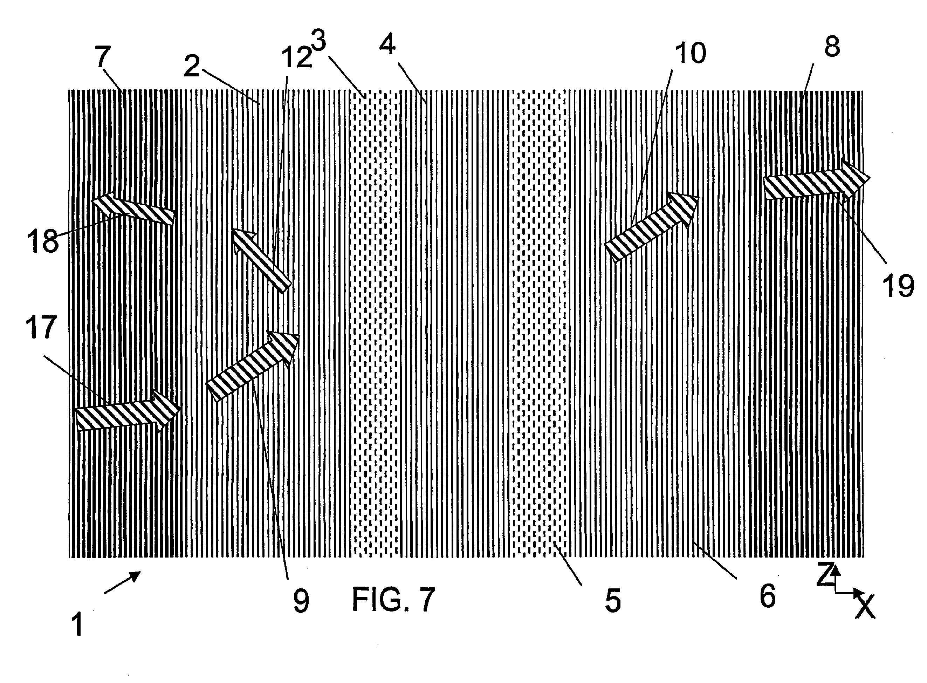

On décrit maintenant un autre mode de réalisation de l'invention en référence à la FIG. 7. Sur cette FIG. 7, le composant 1 comprend en outre deux zones extrêmes 7 et 8 respectivement adjacentes aux zones 2 et 6. Ces zones extrêmes 7 et 8 comprennent également des guides d'onde couplés parallèles dans la direction de guidage Z. Le coefficient de couplage des guides d'onde parallèles couplés de la zone extrême 7 est différent du coefficient de couplage des guides d'onde parallèles couplés de la zone 2, et il est par exemple supérieur à ce dernier. De même, le coefficient de couplage des guides d'onde parallèles couplés de la zone extrême 8 est différent du coefficient de couplage des guides d'onde parallèles couplés de la zone 5, et il est par exemple supérieur à ce dernier

La fonction de la zone 7 est notamment d'ajuster l'incidence d'une onde guidonique incidente 9 vers la zone centrale 4. En effet, au passage de l'interface entre la zone 7 et la zone 2, une onde guidonique d'entrée 17 est déviée du fait de la différence de couplage entre les guides de la zone 7 et les guides de la zone 2. Le rapport entre les coefficients de couplage des guides de la zone 7 et des guides de la zone 2 est alors choisi de sorte que l'onde incidente 9 possède une direction d'incidence permettant une transmission au passage à travers la double barrière formée par les zones de faible couplage 3 et 5. Bien sûr, l'onde réfléchie 12 est également déviée en un faisceau réfléchi dévié 18 qui peut également être utilisé en sortie du composant 1.

De même, la fonction de la zone 8 est d'ajuster l'incidence du faisceau transmis 10, notamment pour qu'un faisceau dévié 18 soit adapté à la sortie du composant 1.

Les modes de réalisation décrits ci-dessus pour faire varier les caractéristiques de transmission du chenal 4 en modifiant sa constante de propagation sont bien sûr utilisables avec un tel réseau à sept bandes au lieu de cinq.

On mentionne maintenant un exemple de dimensions possibles pour le composant illustré FIG. 7. Dans un cas simple, on considère que les faisceaux d'entrée et de sortie ont une direction donnée et qu'ils se propagent dans des zones de couplage inter-guide données 7 et 8. La conception du dispositif consiste à insérer entre ces zones la structure en double barrière optimisée pour la fonction recherchée. On désigne par $L_x$ la largeur de la zone x, exprimée en nombre de guides, et par $C_x$ le couplage inter-guide dans cette zone. La direction incidente dans la zone 7 est définie par $k_{x7}$, son vecteur d'onde selon X en unités réduites à l'inverse de l'espace entre guides dans cette zone.

Le choix des largeurs et des couplages inter-guide de chaque zone peut alors être fait comme suit, en employant des moyens de simulation adéquats, par exemple reposant sur la théorie des modes couplés, et un mélange de simulation numérique à partir des équations brutes, de calcul des modes propres de la structure active, et d'application des diverses lois de la guidonique qui seront décrites plus en détail ci-dessous:

- on se fixe par exemple $C_3=C_5=C_d$, $C_2=C_4=C_6=C_c$, et $L_3=L_5=L_d$ pour des raisons de simplicité.
- on optimise les valeurs de $C_d/C_c$ (hauteur de la barrière obstacle au franchissement), de $L_d$ (largeur de digue) et

de $L_4 = L_c$ (largeur de chenal), ainsi que la composante selon X du vecteur d'onde incident sur la double barrière, $k_{x2}$, pour maximiser la performance recherchée, par exemple la pente de la courbe de réflectivité en fonction de l'incidence. On peut par exemple prendre $C_d/C_c = 0,5$, $L_d = 1$, $L_c = 6$, $k_{x2} = 0,48$ (en unités réduites à l'inverse de l'espace entre guides, pris par exemple constant dans toute la structure).

- on choisit $L_2$ et $L_6$, $L_7$ et $L_8$, de manière à ce qu'elles soient plus larges selon la direction X que la largeur du faisceau qui les traverse, (le faisceau 17 pour la zone 7), avec par exemple $L_2 = L_6$ et $L_7 = L_8$.
- une fois ces choix faits, comme $C_7$ et $k_{x7}$ sont considérés comme des données, toutes les valeurs sont déterminées, dans le cas donné comme exemple, par la relation $C_7 \cos k_{x7} = C_2 \cos k_{x2}$ qui fixe $C_2 = C_c$, dernière inconnue.

Le fonctionnement est obtenu en injectant par exemple un faisceau de guidons de col, ou waist, 20 guides, à 30 guides du centre de la structure, en faisant la détection des signaux réfléchis et transmis à une distance de propagation donnée, par exemple une propagation sur $46/C_4$.

La courbe 15 de la fraction transmise en fonction de la puissance de contrôle est illustrée FIG. 5. L'échelle de puissance est le rapport entre la puissance réelle du faisceau de contrôle 11, exprimée par guide du réseau de guides, et la puissance critique du composant (puissance d'apparition de l'effet d'indice non-linéaire). Cette puissance critique vaut $C_4/\gamma$, où $\gamma$ est le coefficient non-linéaire d'un guide unique, qui dépend de sa taille et de la susceptibilité Kerr du matériau de son coeur.

On décrit ci-dessous plus en détail les lois de réfraction pour une onde guidonique se propageant dans un réseau de guides afin notamment de déterminer les coefficients de couplage à utiliser en fonction des angles d'incidence des faisceaux.

Pour un cas simple de structuration unidimensionnelle, comme entre les zones 7 et 2 de la FIG. 7, l'interface entre les deux zones de guides d'onde parallèles couplés avec des coefficients de couplage différents forme un dioptre. Pour réaliser les calculs, on suppose que les bandes sont semi-infinies de part et d'autre de l'interface.

On désigne par $C.c_1$ le coefficient de couplage de la première bande de guides, par exemple la zone 7, et par $C.c_2$ le coefficient de couplage de la deuxième bande de guides adjacente à la première bande, C étant la référence commune de couplage.

Le passage d'une onde de vecteur d'onde guidonique $(k_x, k_z)$ dans cette géométrie est régi par la conservation de $k_z$, soit $k_{z1} = k_{z2}$, ce qui, compte tenu des relations de diffraction habituelles implique - $2c_1 \cos k_{x1} = -2c_2 \cos k_{x2}$

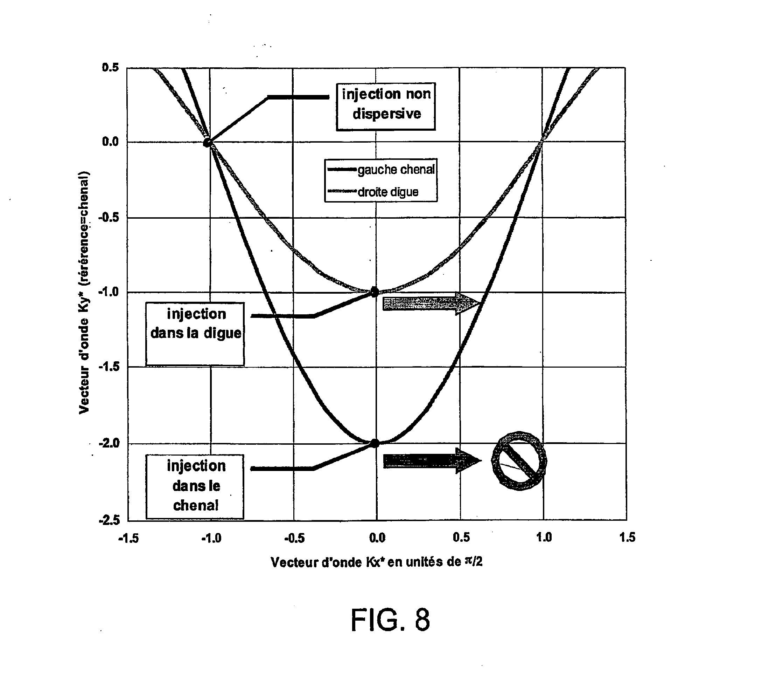

Ces deux équations traduisent le changement du vecteur d'onde et donc l'inclinaison du front d'onde au passage. On peut résoudre ces équations graphiquement en considérant des transitions horizontales entre courbes de diffraction $k_z(k_x)$ comme illustré sur la FIG. 8. Sur cette figure, on a considéré que la première bande est un chenal et la deuxième bande une digue, de sorte que $c_1 > c_2$. Il y a toujours une réflexion spéculaire possible, et une réfraction selon des modalités voisines de celle du photon (angle critique, ...).

Contrairement au photon, pour une onde guidonique, le changement de direction de l'énergie suit une autre loi que le changement de direction du vecteur d'onde.

Cette loi, l'équivalent pour le guidon de la relation de Snell-Descartes, est la combinaison de la loi de passage du vecteur d'onde et de celle qui régit le rapport entre direction du vecteur d'onde et direction de propagation de l'énergie dans les deux milieux.

$$\left(\frac{\Delta x}{\Delta z}\right)_1 = -\partial k_{z1}/\partial k_{x1} = -2\sin(k_{x1})$$

$$\left(\frac{\Delta x}{\Delta z}\right)_2 = -\partial k_{z2}/\partial k_{x2} = -2\sin(k_{x2})$$

$$-2c_1 \cos k_{x1} = -2c_2 \cos k_{x2}$$

$$\left(\frac{\Delta x}{\Delta z}\right)_2 = -2\sin\left(\mathrm{Arc}\cos\left(\frac{c_1}{c_2}\cos\left(\mathrm{Arc}\sin\left(-\frac{1}{2}\left(\frac{\Delta x}{\Delta z}\right)_1\right)\right)\right)\right)$$

Pour un dioptre oblique, c'est-à-dire si l'interface entre deux bandes n'est pas parallèle à la direction de guidage, on peut de la même façon déterminer la loi de réfraction de l'onde guidonique à l'aide de l'équation de conservation. Par exemple, pour une interface oblique définie par son vecteur normal q, la règle de conservation s'écrit $\Delta \vec{k} \alpha \vec{q}$.

On décrit maintenant l'utilisation du composant objet de l'invention pour réaliser des portes logiques tout-optique. L'obtention de différentes portes logiques tout-optique est obtenue en modifiant l'adaptation en entrée et en sortie du composant 1, c'est-à-dire en jouant sur le rapport de contraste $C_7/C_2$ qui déterminera l'incidence $k_z$ dans la zone centrale 4.

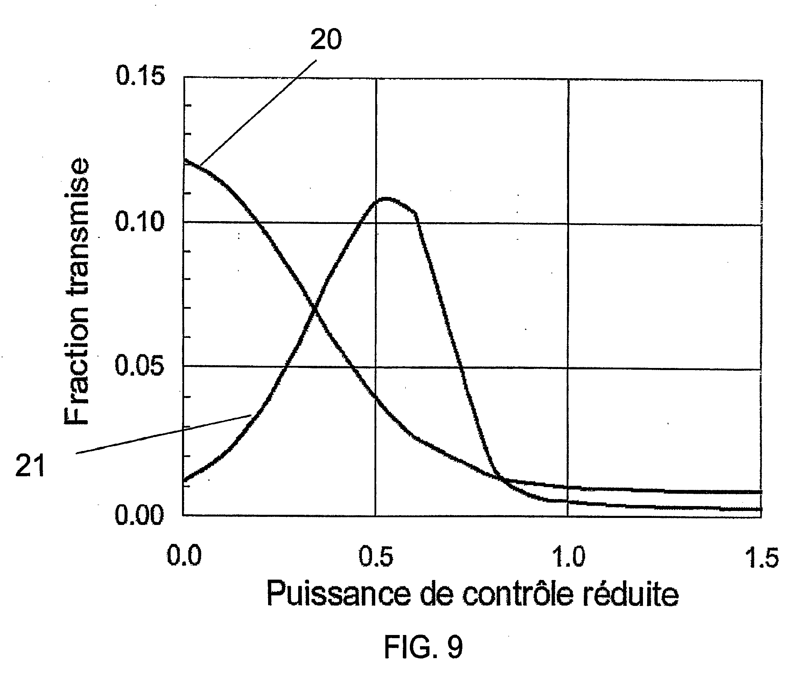

La FIG. 9 illustre deux exemples de fonctions logiques tout-optique.

La courbe 20 représente une fonction de transfert obtenue grâce à un composant selon l'invention dans lequel on a choisi par exemple les valeurs données plus haut pour la conception de la double barrière, avec en plus $C_2=C_7=C_8$, $k_{x2}=0{,}23$, et une propagation sur $128/C_4$. Cette fonction est une fonction d'inversion, ou porte NOT, dans laquelle l'intensité transmise est forte lorsque le faisceau de commande 11 est faible, et l'intensité transmise est faible lorsque le faisceau de commande 11 est fort.

La courbe 21 représente une fonction de transfert obtenue grâce à un autre composant selon l'invention avec la même structure que ci-dessus, mais $k_{x2}=0{,}15$ et une propagation sur $128/C_4$. Cette fonction est une fonction du type XOR, obtenue à l'aide de deux faisceaux de commande 11. La transmission du faisceau incident 9 n'est importante que lorsqu'un des faisceaux de commande est présent. Elle est faible quand aucun n'est présent ou quand tous les deux sont présents et que leurs intensités s'ajoutent.

**Revendications**

1. Composant optique comprenant un réseau de guides d'onde couplés, le réseau de guides d'onde comprenant :

   - une première zone (2) formée de guide d'onde parallèles couplés selon un premier coefficient de couplage ($C_2$) ;
   - une deuxième zone (3) adjacente à la première zone (2) formée de guide d'onde parallèles couplés selon un deuxième coefficient de couplage ($C_3$) inférieur au premier coefficient de couplage ($C_2$) ,
   - une troisième zone (4) adjacente à la deuxième zone (3) formée de guides d'onde parallèles couplés selon un troisième coefficient de couplage ($C_4$) supérieur au deuxième coefficient de couplage ($C_3$) ,
   - une quatrième zone (5) adjacente à la troisième zone (4) formée de guides d'onde parallèles couplés selon un quatrième coefficient de couplage ($C_5$) inférieur au troisième coefficient de couplage ($C_4$) ;
   - une cinquième zone (6) adjacente à la quatrième zone (5), formée de guides d'onde parallèles couplés selon un cinquième coefficient de couplage ($C_6$) supérieur au quatrième coefficient de couplage ($C_5$).

2. Composant optique selon la revendication précédente, dans lequel l'interface entre la deuxième zone (3) et la troisième zone (4) est parallèle à l'interface entre la troisième zone (4) et la quatrième zone (5).

3. Composant optique selon l'une des revendications précédentes, dans lequel la troisième zone (4) a au moins une constante de propagation discrète, et dans lequel le composant optique comprend en outre des moyens de commande (11, 13, 14, 23) agencés pour modifier la constante de propagation de la troisième zone (4).

4. Composant optique selon la revendication précédente, dans lequel les moyens de commande comprennent des moyens optiques (23) agencés pour faire varier la densité de puissance d'au moins un faisceau lumineux de commande (11) dirigé vers la troisième zone (4).

5. Composant optique selon la revendication précédente, dans lequel les moyens optiques (23) sont agencés de sorte que le faisceau lumineux de commande soit susceptible de se propager dans la troisième zone (4).

6. Composant optique selon l'une des revendications 3 à 5, dans lequel les moyens de commande comprennent des moyens électriques (13, 14) agencés pour modifier la constante de propagation de la troisième zone par effet électro-optique.

**7.** Composant optique selon l'une des revendications précédentes, comprenant en outre une sixième zone (7) de guides d'onde parallèles couplés adjacente à la première zone (2).

**8.** Composant optique selon la revendication précédente, dans lequel les guides d'onde parallèles de la sixième zone (7) sont couplés selon un sixième coefficient de couplage ($C_7$), le rapport entre le sixième coefficient de couplage ($C_7$) et le premier coefficient de couplage ($C_2$) étant tel qu'un faisceau (17) se propageant dans la sixième zone (7) soit dévié vers la deuxième zone (3) et puisse se propager jusqu'à la cinquième zone (6).

**9.** Composant optique selon l'une des revendications précédentes, comprenant en outre une septième zone (8) de guides d'onde parallèles couplés adjacente à la cinquième zone (6).


**Patentansprüche**

**1.** Optische Komponente umfassend ein Netz an gekoppelten Wellenleitern, wobei das Wellenleiternetz folgendes umfasst:

- eine erste Zone (2), die aus parallel verlaufendenen Wellenleitern gebildet wird, die gemäß einem ersten Kopplungskoeffizienten ($C_2$) gekoppelt sind;
- eine zweite Zone (3), die an die erste Zone (2) angrenzt, und aus parallel verlaufendenen Wellenleitern gebildet wird, die gemäß einem zweiten Kopplungskoeffizienten ($C_3$) gekoppelt sind, der kleiner ist, als der erste Kopplungskoeffizient ($C_2$),
- eine dritte Zone (4), die an die zweite Zone (3) angrenzt, und aus parallel verlaufendenen Wellenleitern gebildet wird, die gemäß einem dritten Kopplungskoeffizienten ($C_4$) gekoppelt sind, der größer ist, als der zweite Kopplungskoeffizient ($C_3$),
- eine vierte Zone (5), die an die dritte Zone (4) angrenzt, und aus parallel verlaufendenen Wellenleitern gebildet wird, die gemäß einem vierten Kopplungskoeffizienten ($C_5$) gekoppelt sind, der kleiner ist, als der dritte Kopplungskoeffizient ($C_4$);
- eine fünfte Zone (6), die an die vierte Zone (5) angrenzt, und aus parallel verlaufendenen Wellenleitern gebildet wird, die gemäß einem fünften Kopplungskoeffizienten ($C_6$) gekoppelt sind, der größer ist, als der vierte Kopplungskoeffizient ($C_5$).

**2.** Optische Komponente nach dem vorherigen Anspruch, bei der die Schnittstelle zwischen der zweiten Zone (3) und der dritten Zone (4) parallel zur Schnittstelle zwischen der dritten Zone (4) und der vierten Zone (5) verläuft.

**3.** Optische Komponente nach einem der vorherigen Ansprüche, bei der die dritte Zone (4) zumindest eine diskrete Ausbreitungskonstante aufweist, und bei der die optische Komponente darüber hinaus Steuervorrichtungen (11, 13, 14, 23) enthält, die angeordnet sind, um die Ausbreitungskonstante der dritten Zone (4) zu verändern.

**4.** Optische Komponente nach dem vorherigen Anspruch, bei der die Steuervorrichtungen optische Vorrichtungen (23) enthalten, die angeordnet sind, um die Leistungsdichte zumindest eines Steuerlichtbündels (11) variieren zu lassen, das in die dritte Zone (4) gerichtet ist.

**5.** Optische Komponente nach dem vorherigen Anspruch, bei der die optischen Vorrichtungen (23) so angeordnet sind, dass sich das Steuerlichtbündel in die dritte Zone (4) ausbreiten kann.

**6.** Optische Komponente nach einem der Ansprüche 3 bis 5, bei der die Steuervorrichtungen elektrische Vorrichtungen (13, 14) enthalten, die angeordnet sind, um die Ausbreitungskonstante der dritten Zone durch einen elektro-optischen Effekt zu verändern.

**7.** Optische Komponente nach einem der vorherigen Ansprüche, bei der die darüber hinaus eine sechste Zone (7) an parallel verlaufenden Wellenleitern enthält, die an die erste Zone (2) angrenzend gekoppelt ist.

**8.** Optische Komponente nach dem vorherigen Anspruch, bei der die parallel verlaufenden Wellenleiter der sechsten Zone (7) gemäß einem sechsten Kopplungskoeffizienten ($C_7$) gekoppelt sind, wobei das Verhältnis zwischen dem sechsten Kopplungskoeffizienten ($C_7$) und dem ersten Kopplungskoeffizienten ($C_2$) derart gestaltet ist, dass ein Bündel (17), das sich in der sechsten Zone (7) ausbreitet, in die zweite Zone (3) umgeleitet wird, und sich bis in die fünfte Zone (6) ausbreiten kann.

9. Optische Komponente nach einem der vorherigen Ansprüche, die darüber hinaus eine siebte Zone (8) an parallel verlaufenden Wellenleitern enthält, die an die fünfte Zone (6) angrenzend gekoppelt ist.

**Claims**

1. Optical component comprising a grating of coupled waveguides, the waveguide grating comprising:

   - a first zone (2) formed by parallel waveguides coupled in accordance with a first coupling coefficient ($C_2$);
   - a second zone (3) adjacent to the first zone (2) formed by parallel waveguides coupled in accordance with a second coupling coefficient ($C_3$) less than the first coupling coefficient ($C_2$),
   - a third zone (4) adjacent to the second zone (3) formed by parallel waveguides coupled in accordance with a third coupling coefficient ($C_4$) higher than the second coupling coefficient ($C_3$),
   - a fourth zone (5) adjacent to the third zone (4) formed by parallel waveguides coupled according to a fourth coupling coefficient ($C_5$) less than the third coupling coefficient ($C_4$);
   - a fifth zone (6) adjacent to the fourth zone (5), formed by parallel waveguides coupled in accordance with a fifth coupling coefficient ($C_6$) higher than the fourth coupling coefficient ($C_5$).

2. Optical component according to the preceding claim, wherein the interface between the second zone (3) and the third zone (4) is parallel to the interface between the third zone (4) and the fourth zone (5).

3. Optical component according to one of the preceding claims, wherein the third zone (4) has at least one discrete propagation constant and wherein the optical component further comprises control means (11, 13, 14, 23) arranged so as to modify the propagation constant of the third zone (4).

4. Optical component according to the preceding claim, wherein the control means comprise optical means (23) arranged to vary the power density of at least one control light beam (11) directed towards the third zone (4).

5. Optical component according to the preceding claim, wherein the optical means (23) are arranged so that the control light beam is able to propagate in the third zone (4).

6. Optical component according to one of claims 3 to 5, wherein the control means comprise electrical means (13, 14) arranged so as to modify the propagation constant of the third zone by electro-optical effect.

7. Optical component according to one of the preceding claims, further comprising a sixth zone (7) of coupled parallel waveguides adjacent to the first zone (2).

8. Optical component according to the preceding claim, wherein the parallel waveguides of the sixth zone (7) are coupled according to a sixth coupling coefficient ($C_7$), the ratio between the sixth coupling coefficient ($C_7$) and the first coupling coefficient ($C_2$) being such that a beam (17) propagating in the sixth zone (7) is diverted to the second zone (3) and can propagate as far as the fifth zone (6).

9. Optical component according to one of the preceding claims, further comprising a seventh zone (8) of coupled parallel waveguides adjacent to the fifth zone (6).

FIG. 1

FIG. 2

FIG. 3

FIG. 4

FIG. 5

FIG. 6

EP 2 335 113 B1

FIG.7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2008000628 W

**Littérature non-brevet citée dans la description**

- **FLEISCHER et al.** Spatial photonics in nonlinear waveguide arrays. *Optics Express,* 2005, vol. 13 (6), 1780-1796
- **RICHARD R.A.** Approximate solution of Eigenmode Problems for coupled waveguide Arrays. *Syms, IEEE Journal of Quantum Electronics,* 1987, vol. QE 25 (5), 525-532
- **H.S. EISENBERG ; Y. SILVERBERG ; R. MORANDOTTI ; J.S. AITCHISON.** Diffraction management. *Physical Review Letters,* 2000, vol. 85 (9), 1863-1866
- **J. MEIER.** Incohérent blocker soliton interactions in Kerr waveguide arrays. *Optics Letters,* 2005, vol. 30 (23), 3174-3176